# EUROPEAN PATENT APPLICATION

(11) **EP 2 418 649 A2**
(43) Date of publication of application: **15.02.2012**
(21) Application number: 11173422.4
(22) Date of filing: 11.07.2011
(51) Int. Cl.: G21C 3/322, G21C 7/32, G21C 15/06

(54) **Pressure-loss adjusting member and reactor**

(30) Priority: 13.07.2010 JP 2010159182
(71) Applicant: Mitsubishi Heavy Industries, Tokyo 108-8215 (JP)
(72) Inventor: Matsumoto, Atsushi, Tokyo 108-8215 (JP); Kubo, Noboru, Tokyo 108-8215 (JP); Yoshimura, Ryo, Tokyo 108-8215 (JP)
(74) Representative: HOFFMANN EITLE

(57) **Abstract**

[Problem to be Solved] To suppress problems due to a flow of a primary coolant while easily distributing a flow rate of the primary coolant to fuel assemblies.

[Solution] A pressure-loss adjusting member 60 includes: a pressure-loss adjusting hole 62 that can cause light water to pass therethrough in a state with a pressure-loss being increased more than that of when light water flowing around the fuel assembly passes through only a core support plate flow hole formed in a lower core support plate; and a core support plate engaging unit 70 that can be engaged with the lower core support plate by being inserted into the core support plate flow hole. Accordingly, the flow rate of light water flowing toward the fuel assembly can be reduced by arranging the pressure-loss adjusting member 60 between a lower nozzle of a fuel assembly having a small pressure-loss and the lower core support plate, and rattling or the like of the pressure-loss adjusting member 60 can be suppressed by engaging the core support plate engaging unit 70 with the lower core support plate. As a result, problems due to the flow of light water can be suppressed, while easily distributing the flow rate of light water to the fuel assemblies.

## Description

### [Technical field]

The present invention relates to a pressure-loss adjusting member and a reactor.

### [Background art]

In a reactor internal, which is a part that reacts fuel in a reactor, a plurality of fuel rods are arranged therein in a state of a fuel assembly having a bundle of fuel rods, and the circumference of the fuel assembly is filled with light water used as a primary coolant or a moderating material. In a pressurized water reactor (PWR) , which is one type of reactors, a path at the time of extracting energy is separated into a primary cooling system and a secondary cooling system. In the primary cooling system, light water exposed to heat at the time of a fuel reaction is made high-temperature and high-pressure water by pressurizing light water circulating in the reactor including the reactor internal so that light water does not boil. In the secondary cooling system, light water circulating in the secondary cooling system is exposed to heat of the high-temperature and high-pressure water in the primary cooling system so that light water is brought to a boil, and energy is extracted as high-temperature and high-pressure steam.

In the pressurized water reactor, a plurality of fuel assemblies are mounted on a lower core support plate provided in a lower part of a reactor vessel, in a state with the fuel assembly being mounted on a lower nozzle. A plurality of holes are formed on the lower core support plate and the lower nozzle, and light water circulating in the reactor internal flows upward from below the core support plate, passes through the holes in the lower core support plate and then the holes in the lower nozzle, and flows toward the fuel assembly on the lower nozzle. Accordingly, the light water circulates in the primary cooling system, while being exposed to the heat at the time of a. fuel reaction.

In the pressurized water reactor, at the time of circulation of light water, light water passes through the holes in the lower core support plate and in the lower nozzle and flows to the circumference of the fuel assembly. However, a flow rate of light water flowing to the circumference of the fuel assembly may be different according to an arrangement position of the fuel assembly. Further, when the performance of the reactor at the time of operation is considered, it may be desired to adjust the flow rate thereof to the fuel assembly. Therefore, the conventional reactor may have a structure for adjusting the flow rate of light water flowing to the fuel assemblies.

For example, in a reactor described in Patent Literature 1, a flow-resistance changing member is provided on a lower core support plate so that the flow resistance of holes formed in a central part of the lower core support plate is increased with respect to the flow resistance of the holes formed on a periphery of the lower core support plate, of the holes formed on the lower core support plate. When light water passes through the holes in the lower core support plate, such flow distribution is likely to occur that the flow rate increases in a central part than in the periphery of the lower core support plate due to an influence of structures in the reactor. By providing a flow-resistance changing member to change the flow resistance in this manner, the flow distribution can be equalized.

In a fuel assembly for a pressure-loss variable pressurized water reactor described in Patent Literature 2, a pressure-loss adjusting plate having a pressure-loss adjusting element fixed thereon, which is arranged at a position corresponding to holes formed in a lower nozzle, is fixed by a screw on a lower surface of the lower nozzle. Accordingly, the flow rate of light water to the fuel assembly positioned on the lower nozzle can be adjusted for each of fuel assemblies.

### [Citation List]

### [Patent Literature]

[PTL 1] JP 2009-75001A
[PTL 2] JP H5-240982A

### [Summary of Invention]

### [Technical Problem]

When energy is to be extracted from the fuel assembly by the reactor, it is desired that the flow rate of light water flowing from below the lower plenum toward the fuel assemblies is distributed to generate uniform flow with respect to the fuel assemblies. In the reactor, however, the arrangement position of the fuel assembly on the lower core support plate may be changed at the time of inspection. Further, a pressure-loss in the fuel assembly may be different according to the fuel assembly. Therefore, when the arrangement position of the fuel assembly is changed, it may be preferable to change the flow resistance according to the pressure-loss in the fuel assembly. However, when the flow-resistance changing member is provided on the lower core support plate as described in Patent Literature 1, even if it is desired to change the flow resistance, it may be difficult to correspond to this change.

Further, as described in Patent Literature 2, when the pressure-loss adjusting plate is fixed by a screw on the lower surface of the lower nozzle, because the pressure-loss adjusting plate is fitted to each lower nozzle, the flow resistance can be changed by replacing the pressure-loss adjusting plate. However, because the pressure-loss adjusting plate is fixed by the screw to the lower nozzle, which is arranged in plural on the lower core support plate, it is a complicated work to provide a member used for adjusting the flow rate.

When only the pressure-loss adjusting plate is arranged on the lower core support plate to avoid such complications, the pressure-loss adjusting plate may rattle due to a flow of light water. When rattling of the pressure-loss adjusting plate is to be suppressed, it can be considered that the pressure-loss adjusting plate is arranged between the lower nozzle and the lower core support plate to hold down the pressure-loss adjusting plate by a biasing force of a spring that applies a biasing force to the fuel assembly in a direction of the lower core support plate. However, the biasing force to be applied to the fuel assembly may decrease due to aged deterioration. In this case, a force for holding down the pressure-loss adjusting plate also decreases, and the pressure-loss adjusting plate may rattle due to the flow of light water.

The present invention has been achieved to solve the above problems, and an object of the present invention is to provide a pressure-loss adjusting member and a reactor that can suppress problems due to a flow of a primary coolant, while easily distributing a flow rate of the primary coolant to fuel assemblies.

### [Solution to Problem]

According to an aspect of the present invention, a pressure-loss adjusting member includes: a pressure-loss adjusting hole that is configured to cause a primary coolant for a fuel assembly to pass therethrough in a state with a pressure-loss in the fuel assembly being increased more than that of when the primary coolant passes through only a core support plate flow hole formed in a lower core support plate; and a core support plate engaging unit that is configured to be engaged with the lower core support plate by being inserted into the core support plate flow hole.

According to the present invention, because the pressure-loss adjusting hole is formed in the pressure-loss adjusting member, when the primary coolant flows from the lower core support plate, on which the pressure-loss adjusting member is arranged, toward the lower nozzle, the primary coolant having passed through the core support plate flow hole passes and flows through the pressure-loss adjusting hole. Because the pressure-loss adjusting hole can cause the primary coolant to pass therethrough in a state with a pressure-loss in the fuel assembly being increased more than that of when the primary coolant for the fuel assembly passes through only the core support plate flow hole, when the pressure-loss adjusting member is arranged on the lower core support plate, the primary coolant flows in a state with a presssre-loss being increased as compared with a case that the pressure-loss adjusting member is not arranged on the lower core support plate. Accordingly, by arranging the pressure-loss adjusting member between the lower nozzle of a fuel assembly having a small pressure-loss and the lower core support plate, the pressure-loss of the primary coolant flowing toward the fuel assembly can be increased, thereby enabling to decrease the flow rate. Therefore, the flow rate of the primary coolant flowing in the fuel assembly can be made substantially the same as that of the primary coolant flowing in a fuel assembly having a large pressure-loss.

Because the core support plate engaging unit that can be engaged with the lower core support plate is provided in the pressure-loss adjusting member, even when the primary coolant passes through the pressure-loss adjusting hole, it can be suppressed that the pressure-loss adjusting member moves due to a force generated when the primary coolant flows, and rattling or the like of the pressure-loss adjusting member due to the flow of the primary coolant can be suppressed. As a result, problems due to the flow of the primary coolant can be suppressed, while easily distributing the flow rate of the primary coolant to fuel assemblies.

Advantageously, in the pressure-loss adjusting member, the core support plate engaging unit is provided in an engageable manner with the lower core support plate, by abutting against the lower core support plate in a direction in which the primary coolant passes through the pressure-loss adjusting hole.

According to the present invention, because the core support plate engaging unit abuts against the lower core support plate in a direction in which the primary coolant passes through the pressure-loss adjusting holes, it can be suppressed more reliably that the pressure-loss adjusting member moves due to the force generated when the primary coolant flows. As a result, problems due to the flow of the primary coolant can be suppressed more reliably.

Advantageously, in the pressure-loss adjusting member, the core support plate engaging unit is provided so that switching between engagement and release with respect to the lower core support plate can be performed by turning thereof.

According to the present invention, because the core support plate engaging unit is provided so that switching between engagement and release with respect to the lower core support plate is possible by turning thereof, the core support plate engaging unit can be easily engaged with the lower core support plate. As a result, problems due to the flow of the primary coolant can be suppressed more easily.

Advantageously, in the pressure-loss adjusting member, the core support plate engaging unit includes: a rotation, shaft that is inserted into the core support plate flow hole and becomes an axis at a time of turning; and an engaging member that is connected to the rotation shaft and turns with turning of the rotation shaft to switch between abutment and alienation with respect to the lower core support plate.

According to the present invention, because the core support plate engaging unit includes the turning shaft inserted into the core support plate flow hole and the engaging member that turns with turning of the turning shaft, the core support plate engaging unit can be engaged with the lower core support plate, without performing machining for engagement with the core support plate engaging unit with respect to the lower core support plate. As a result, problems due to the flow of the primary coolant can be suppressed more easily.

According to another aspect of the present invention, a reactor includes: a lower nozzle formed with a plurality of nozzle flow holes, through which a primary coolant for a fuel assembly can flow toward the fuel assembly, and arranged at one end of the fuel assembly; a lower core support plate provided so that a plurality of lower nozzles can be arranged on one surface thereof, and a plurality of core support plate flow holes that can cause the primary coolant to flow therethrough in a direction from a surface of the lower core support plate opposite to a surface on the lower nozzle side toward the lower nozzle are formed therein; and the pressure-loss adjusting member of any one of above mentioned, which is arranged between the lower nozzle arranged at one end of the fuel assembly having a relatively small pressure-loss and the lower core support plate, with the core support plate engaging unit engaging with the lower core support plate at a position between the lower nozzle and the lower core support plate.

According to the present invention, the pressure-loss adjusting member is arranged between the lower nozzle arranged at one end of the fuel assembly having a relatively small pressure-loss and the lower core support plate. Therefore, the flow rate of the primary coolant flowing in the fuel assembly can be made substantially the same as that of the primary coolant flowing in the fuel assembly having a relatively large pressure-loss. That is, when the primary coolant flows from the lower core support plate toward the lower nozzle, the pressure-loss adjusting member can cause the primary coolant to flow in a state with a large pressure-loss, as compared with a case that the pressure-loss adjusting member is not arranged. Therefore, by arranging the pressure-loss adjusting member between the lower nozzle arranged at one end of the fuel assembly having a relatively small pressure-loss and the lower core support plate, it can be suppressed that the primary coolant flows much to the fuel assembly having a small pressure-loss, when the primary coolant flows from the lower core support plate toward the fuel assembly. Accordingly, the flow rate of the primary coolant flowing to the fuel assemblies can be made substantially the same, regardless of the magnitude of the pressure-loss in the fuel assemblies.

The core support plate engaging unit is provided in the pressure-loss adjusting member, and the pressure-loss adjusting member can be arranged in a state engaged with the lower core support plate by the core support plate engaging unit. Accordingly, even when the primary coolant passes through the pressure-loss adjusting holes, it can be suppressed that the pressure-loss adjusting member moves due to the force generated when the primary coolant flows, and rattling or the like of the pressure-loss adjusting member due to the flow of the primary coolant can be suppressed. As a result, problems due to the flow of the primary coolant can be suppressed, while easily distributing the flow rate of the primary coolant to the fuel assemblies.

### [Advantageous Effects of Invention]

The pressure-loss adjusting member according to the present invention can suppress problems due to a flow of a primary coolant, while easily distributing the flow rate of the primary coolant to fuel assemblies. Further, the reactor according to the present invention can also suppress problems due to the flow of the primary coolant, while easily distributing the flow rate of the primary coolant to fuel assemblies.

### [Brief Description of Drawings]

[FIG. 1] FIG. 1 is a schematic diagram of a reactor including a pressure-loss adjusting member according to an embodiment of the present invention.
[FIG. 2] FIG. 2 is a sectional view along a line A-A in FIG. 1.
[FIG. 3] FIG. 3 is a detailed diagram of relevant parts of a lower core support plate shown in FIG. 1.
[FIG. 4] FIG. 4 is a perspective view on an upper surface side of a lower nozzle.
[FIG. 5] FIG. 5 is a perspective view on a lower surface side of the lower nozzle.
[FIG. 6] FIG. 6 is a perspective view of the pressure-loss adjusting member according to the embodiment.
[FIG. 7] FIG. 7 is a sectional view along a line B-B in FIG. 6.
[FIG. 8] FIG. 8 is a view on arrow along a line C-C in FIG. 7.
[FIG. 9] FIG. 9 is a schematic diagram for explaining a case when the pressure-loss adjusting member shown in FIG. 6 is arranged on a lower core support plate.
[FIG. 10] FIG. 10 is a perspective view of a state where the pressure-loss adjusting member shown in FIG. 6 is arranged on a lower core support plate.
[FIG. 11] FIG. 11 is a schematic diagram for explaining a state before the core support plate engaging unit provided in the pressure-loss adjusting member shown in FIG. 10 and a lower core support plate are engaged with each other.
[FIG. 12] FIG. 12 is a schematic diagram for explaining a state after the core support plate engaging unit provided in the pressure-loss adjusting member shown in FIG. 10 and a lower core support plate are engaged with each other.
[FIG. 13] FIG. 13 is a sectional view of relevant parts shown in FIG. 10.

### [Description of Embodiments]

Exemplary embodiments of a pressure-loss adjusting member and a reactor according to the present invention will be explained below in detail with reference to the accompanying drawings. The present invention is not limited to the following embodiments. In addition, constituent elements in the following embodiments include elements replaceable by those skilled in the art, or substantially the same elements.

### [Embodiment]

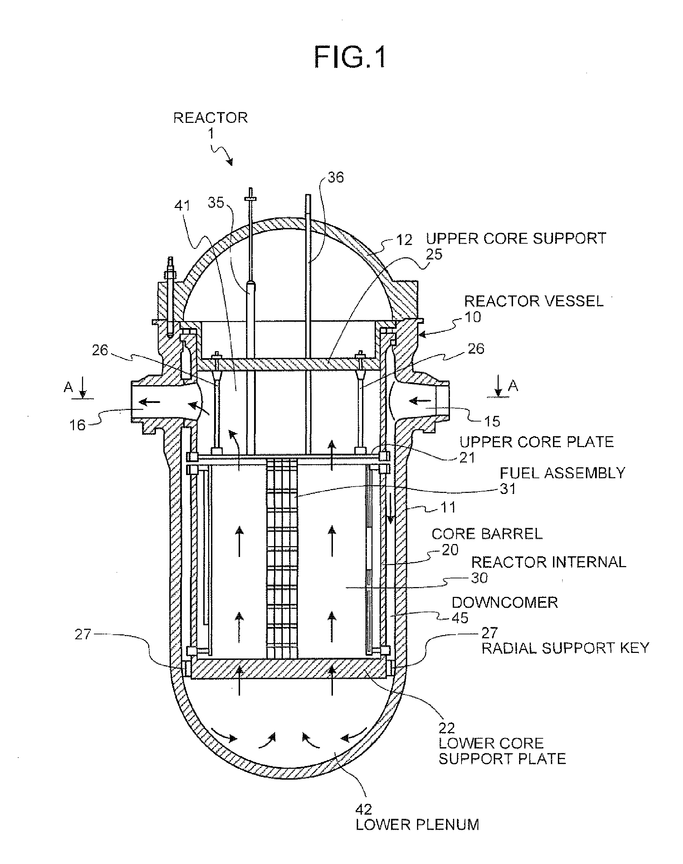

FIG. 1 is a schematic diagram of a reactor including a pressure-loss adjusting member according to a first embodiment of the present invention. In the following explanations, an upper part in an installed state of a reactor 1 at the time of use is designated as an upper part in respective units, and a lower part in the installed state of the reactor 1 at the time of use is designated as a lower part in the respective units. The reactor 1 shown in FIG. 1 is a pressurized water reactor in which a path for extracting energy is separated into a primary cooling system and a secondary cooling system. An outline of a nuclear power plant using the pressurized water reactor is explained below. In the pressurized water reactor, light water is used as a reactor primary coolant and a neutron moderator, and by providing a pressurizer (not shown) in the primary cooling system, which is a circulation path of light water, light water can be turned into high-temperature and high-pressure water, which does not boil in all over a reactor internal in the primary cooling system. In the primary cooling system, the high-temperature and high-pressure water is fed to a steam generator (not shown), which is a part that performs heat exchange with the secondary cooling system, to perform heat exchange with light water circulating in the secondary cooling system. In the secondary cooling system, steam is generated due to heat exchange, and the generated steam is fed to a turbine generator (not shown), to generate power by the turbine generator.

In the reactor 1 according to the embodiment, which is provided as the pressurized water reactor, a reactor vessel 10 provided as a pressure vessel includes a reactor vessel body 11 and a reactor vessel lid 12 mounted on the reactor vessel body 11 and capable of being opened and closed with respect to the reactor vessel body 11, so that core internals can be inserted therein. The reactor vessel body 11 is formed substantially in a cylindrical shape with an upper part thereof in a vertical direction at the time of installation of the reactor 1 being opened and a lower part thereof being in a spherical shape and closed. An inlet nozzle 15 and an outlet nozzle 16 for feeding and discharging light water (a primary coolant) as primary cooling water, which is used in the primary cooling system, are formed near an upper end thereof, which is an end on the open side.

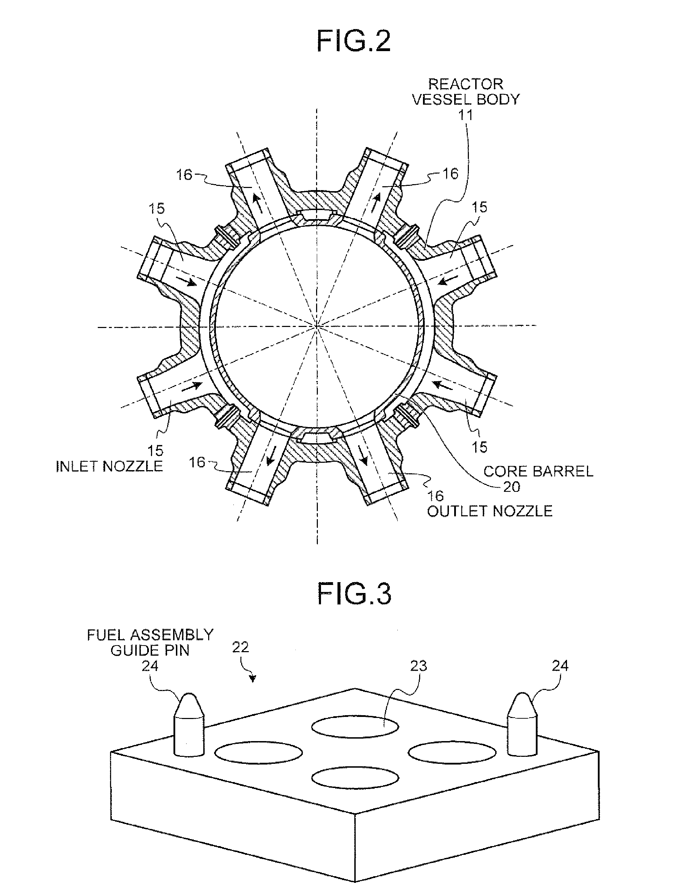

FIG. 2 is a sectional view along a line A-A in FIG. 1. Flour inlet nozzles 15 and four outlet nozzles 16 are formed in the reactor vessel body 11 and eight nozzles in total are arranged with equal intervals on the outer periphery of the reactor vessel body 11 formed substantially in the cylindrical shape. In more detail, the inlet nozzles 15 and the outlet nozzles 16 are arranged in such a manner that two of the same type of nozzles are continuously arranged, and when two nozzles of the same type continuously arranged are designated as one set, the set of nozzles are alternately arranged.

Below the inlet nozzles 15 and the outlet nozzles 16 in the reactor vessel body 11, a core barrel 20 formed substantially in a cylindrical shape is arranged, and the core barrel 20 is arranged with a predetermined gap from an inner surface of the reactor vessel body 11. That is, the core barrel 20 formed substantially in the cylindrical shape has a smaller diameter than that of the reactor vessel body 11 formed substantially in the cylindrical shape, and by arranging the core barrel 20 in the reactor vessel body 11 so that central axes of both cylindrical forms match with each other, there is a gap between the core barrel 20 and the inner surface of the reactor vessel body 11.

An upper core plate 21 formed in a disk shape and having many flow holes (not shown) formed therein is connected to an upper part of the core barrel 20. A lower core support plate 22 similarly formed in a disk shape is connected to a lower part of the core barrel 20, and core support plate flow holes 23 (see FIG. 3), which are flow holes in the lower core support plate 22, are formed in plural. An upper core support 25 positioned in the upper part of the core barrel 20 and formed in a disk shape is fixed inside of the reactor vessel body 11, and the upper core plate 21 is suspended from the upper core support 25 and supported via a plurality of reactor internal support rods 26. That is, the core barrel 20 connected to the upper core plate 21 is also suspended and supported by the upper core support 25 , because the upper core plate 21 is suspended and supported by the upper core support 25 via the reactor internal support rods 26. On the other hand, the lower core support plate 22 is positioned and held by a plurality of radial support keys 27 with respect to the inner surface of the reactor vessel body 11, and thus the core barrel 20 is positioned and held by the radial support keys 27 with respect to the inner surface of the reactor vessel body 11.

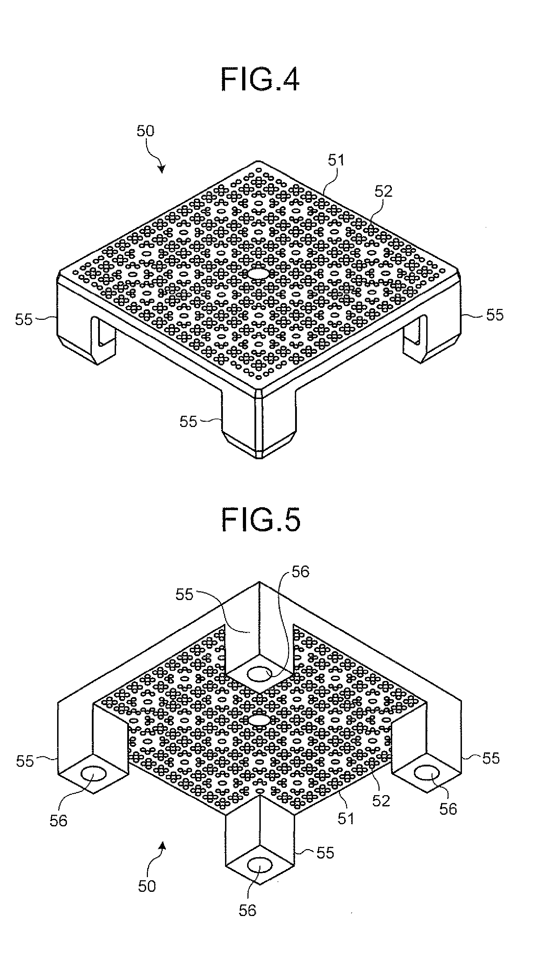

A reactor internal 30 includes the core barrel 20, the upper core plate 21, and the lower core support plate 22 provided in this manner, and many fuel assemblies 31 are arranged in the reactor internal 30. The fuel assembly 31 is formed by bundling a number of fuel rods in a reticular pattern by a support grid, with an upper nozzle (not shown) being fixed to an upper end thereof and a lower nozzle 50 (see FIG. 4) being fixed to a lower end thereof. The fuel assembly 31 also includes a control-rod guide tube into which a control rod is inserted, and an incore-instrumentation guide tube into which an incore-instrumentation detector is inserted, in addition to the fuel rods.

The upper core support 25 supports a number of control-rod-cluster guide tubes 35 and a number of incore-instrumentation guide tubes 36 in such a state that the control-rod-cluster guide tubes 35 and the incore-instrumentation guide tubes 36 penetrate through the upper core support 25. Among these elements, the control-rod-cluster guide tube 35 is provided as a guide tube for a cluster-type control rod (not shown) in which a plurality of control rods are collectively driven, and a control-rod-cluster drive shaft extending from a control-rod drive unit (not shown) provided in the reactor vessel lid 12 is extended to the fuel assembly 31, passing in the control-rod-cluster guide tube 35. The control rod is fitted to a bottom end of the control-rod-cluster drive shaft and inserted into the control-rod guide tube included in the fuel assembly 31. Further, the incore-instrumentation guide tube 36 is provided as a guide tube for incore neutron instrumentation (not shown) for measuring neutrons in the reactor vessel 10, and a bottom end thereof is extended to the fuel assembly 31.

In the reactor vessel 10, a portion positioned above the reactor internal 30 and communicating with the outlet nozzle 16 is formed as an upper plenum 41, and a hemispherical space positioned below the reactor internal 30 and formed of the lower core support plate 22 and an inner surface of a spherical closed portion below the reactor vessel body 11 is formed as a lower plenum 42. A portion formed between the reactor vessel 10 and the core barrel 20 and communicating with the inlet nozzle 15 and the lower plenum 42 is formed as a downcomer 45. That is, the upper plenum 41 is sectioned by the core barrel 20, the upper core support 25, and the upper core plate 21, and communicates with the outlet nozzle 16 and also communicates with the reactor internal 30 via a number of flow holes formed on the upper core plate 21. The lower plenum 42 is sectioned by the lower core support plate 22 as a bottom of the core barrel 20 and the reactor vessel body 11, and communicates with the reactor internal 30 via a number of flow holes formed on the lower core support plate 22. The downcomer 45 is sectioned by the reactor vessel body 11 and a side wall of the core barrel 20, with an upper part thereof communicating with the inlet nozzle 15 and a lower part thereof communicating with the lower plenum 42.

FIG. 3 is a detailed diagram of relevant parts of the lower core support plate shown in FIG. 1. A number of core support plate flow holes, which are flow holes bored in a thickness direction of the plate, that is, in a vertical direction, are formed on the lower core support plate 22. Further, the lower core support plate 22 is provided so that a number of the fuel assemblies 31 can be arranged thereon, and fuel assembly guide pins 24 used for the arrangement of the fuel assemblies 31 are provided on an upper surface of the lower core support plate 22, which is a surface for arranging the fuel assemblies 31.

The fuel assembly guide pin 24 protrudes upward on an upper surface of the lower core support plate 22 in a round-bar shape, and a top end is formed in a tapered shape and tapered off to a point. The fuel assembly guide pin 24 can be provided in such a manner that the fuel assembly 31 can be arranged at an appropriate position by being used for positioning of the lower nozzle 50 at the arrangement position, which is fixed to the lower end of the fuel assembly 31, at the time of arranging the fuel assembly 31 on the lower core support plate 22. That is, the fuel assembly guide pin 24 can be provided so that the lower nozzle 50 can be arranged at an appropriate position in a portion where the lower nozzle 50 is arranged on the lower core support plate 22.

FIG. 4 is a perspective view on an upper surface side of the lower nozzle. FIG. 5 is a perspective view on a lower surface side of the lower nozzle. The lower nozzle 50 arranged at the lower end of the fuel assembly 31 includes a nozzle portion 51 formed substantially in a rectangular plate shape, and a plurality of legs 55 formed on the nozzle portion 51. A number of nozzle flow holes 52 penetrating in a thickness direction of the plate are formed in the nozzle portion 51. The legs 55 are provided on one surface of the nozzle portion 51, and four legs 55 protrudes respectively from four corners on the surface in the thickness direction of the nozzle portion 51 with a same height.

A positioning hole 56 formed in a height direction of the leg 55 is formed at an end opposite to the end on the nozzle portion 51 side is formed in the leg 55. The positioning hole 56 opens at the end of the leg 55 as a hole, into which the fuel assembly guide pin 24 formed on the lower core support plate 22 is inserted, and is formed with a predetermined depth. The lower nozzle 50 formed in this manner is fixed to the lower end of the fuel assembly 31 in such an orientation that the leg 55 side is positioned on the lower side and a surface of the nozzle portion 51 on which the leg is formed faces upward, and the fuel assembly 31 is mounted on a surface opposite to the surface on the leg 55 side in the nozzle portion 51.

When the lower nozzle 50 is mounted on the lower core support plate 22 in such an orientation that the leg 55 side is positioned on the lower side, the fuel assembly guide pin 24 formed on the lower core support plate 22 are inserted into two positioning holes 56, respectively, of four positioning holes 56 formed in the four legs 55. That is, the legs 55 protrude from four corners of the nozzle portion 51 formed in a rectangular shape, and the fuel assembly guide pins 24 are respectively inserted into two positioning holes 56 formed in the legs 55 protruding from two corners having a diagonal relationship in the nozzle portion 51.

With the above arrangements, the two fuel assembly guide pins 24 formed in a portion where the lower nozzle 50 is arranged on the lower core support plate 22 and the two positioning holes 56 formed in the two legs 55 positioned in the diagonal relationship in the nozzle portion 51 of the lower nozzle 50 have substantially the same positional relationship relative to each other. When the lower nozzle 50 is arranged on the lower core support plate 22, the two fuel assembly guide pins 24 are inserted into the two positioning holes 56 to arrange the lower nozzle 50.

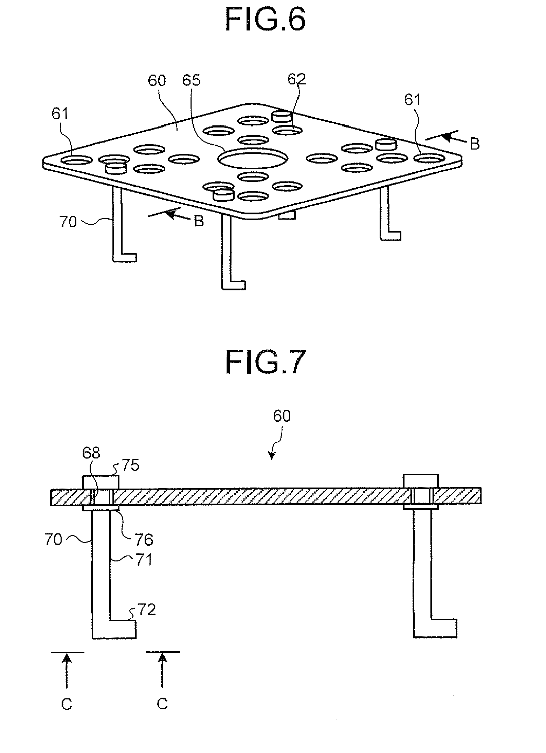

FIG. 6 is a perspective view on the pressure-loss adjusting member according to the embodiment. The lower nozzle 50 and the lower core support plate 22 are provided in such a manner that the lower nozzle 50 can be arranged on the lower core support plate 22 with a pressure-loss adjusting member 60 being located therebetween. The pressure-loss adjusting member 60 is explained below. The pressure-loss adjusting member 60 is formed substantially in a rectangular thin plate-like shape, and engagement holes 61 penetrating in a thickness direction of the plate are formed near two corners forming one of two opposing corners.

The engagement holes 61 are provided as holes into which the fuel assembly guide pins 24 formed on the lower core support plate 22 are respectively inserted, and are formed in the same positional relationship as a relative positional relationship between the positioning holes 56 formed in plural in the lower nozzle 50. That is, the two engagement holes 61. formed near the two corners of the pressure-loss adjusting member 60 are formed in the same positional relationship as the relative positional relationship between the positioning holes 56 into which the two fuel assembly guide pins 24 are inserted at the time of arranging the lower nozzle 50, of the four positioning holes 56 formed in the lower nozzle 50. Accordingly, two fuel assembly guide pins 24 that can be inserted into the positioning holes 56 in one lower nozzle 50, of the fuel assembly guide pins 24 formed in plural on the lower core support plate 22, can be inserted into the two engagement holes 61 formed in the pressure-loss adjusting member 60.

Further, the pressure-loss adjusting member 60 further includes a plurality of pressure-loss adjusting holes 62 penetrating in a thickness direction of the plate of the pressure-loss adjusting member 60. Because the pressure-loss adjusting member 60 is formed in a plate-like shape, the engagement holes 61 and the pressure-loss adjusting holes 62 are formed on the same plane.

Core support plate engaging units 70 that can be engaged with the lower core support plate 22 are provided in the pressure-loss adjusting member 60. The core support plate engaging units 70 are provided near positions corresponding to the core support plate flow holes 23 in the same number as that of the core support plate flow holes 23, in a state with the fuel assembly guide pins 24 on the lower core support plate 22 inserted into the engagement holes 61. That is, the core support plate engaging units 70 are formed in a positional relationship with the engagement holes 61 close to the positional relationship between the core support plate flow holes 23 and the fuel assembly guide pins 24 positioned in a range of the pressure-loss adjusting member 60 when the fuel assembly guide pins 24 are respectively inserted into the engagement holes 61 to arrange the pressure-loss adjusting member 60 on the lower core support plate 22.

FIG. 7 is a sectional view along a line B-B in FIG. 6. The core support plate engaging unit 70 is explained in detail. The core support plate engaging unit 70 includes a turning shaft 71 as an axis at the time of turning, an engaging member 72 connected to one end of the turning shaft 71, an upper latch member 75 connected to the other end of the turning shaft 71, and a lower latch member 76 provided on the turning shaft 71 at a position between the upper latch member 75 and the engaging member 72. A gap between the upper latch member 75 and the lower latch member 76 in an axial direction of the turning shaft 71 is substantially equal to a plate thickness of the pressure-loss adjusting member 60. A gap between the lower latch member 76 and the engaging member 72 in the axial direction of the turning shaft 71 is substantially equal to a plate thickness of the lower core support plate 22.

The upper latch member 75 is formed substantially in a cylindrical shape, the lower latch member 76 is formed substantially in a disk shape, and the upper latch member 75 and the lower latch member 76 are provided in a direction in which central axes thereof substantially agreeing with a central axis of the turning shaft 71.

A turning shaft hole 68 penetrating in a thickness direction of a plate of the pressure-loss adjusting member 60 and formed with a diameter slightly larger than that of the turning shaft 71 is formed in a portion of the pressure-loss adjusting member 60 where the core support plate engaging unit 70 is arranged. The core support plate engaging unit 70 is put between the upper latch member 75 and the lower latch member 76 in a state with the turning shaft 71 passing through the turning shaft hole 68, and is supported by the turning shaft hole 68. Accordingly, the core support plate engaging unit 70 is supported in a state such that an axial movement of the turning shaft 71 is regulated by the upper latch member 75 and the lower latch member 76. Thus, when the core support plate engaging unit 70 is supported by the turning shaft hole 68 in a state with the turning shaft 71 positioned between the upper latch member 75 and the lower latch member 76 passing through the turning shaft hole 68, because the gap between the lower latch member 76 and the engaging member 72 is substantially equal to the plate thickness of the lower core support plate 22, the gap between the surface of the pressure-loss adjusting member 60 on the lower latch member 76 side and the engaging member 72 becomes substantially equal to the plate thickness of the lower core support plate 22.

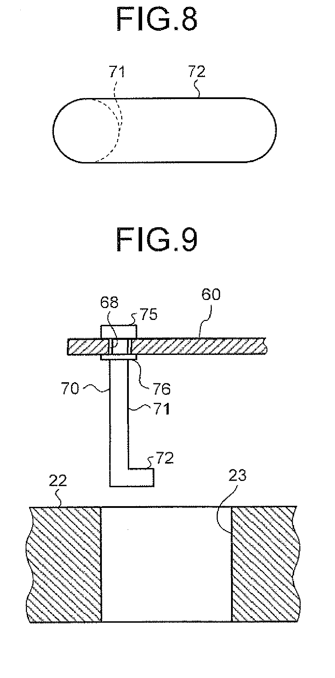

FIG. 8 is a view on arrow along a line C-C in FIG. 7. The engaging member 72 connected to the end of the turning shaft 71 is formed in a shape protruding in a direction orthogonal to an axial direction of the turning shaft 71. Specifically, the engaging member 72 is formed in an oval plate shape having a predetermined thickness, and the diameter of an ellipse is the same as that of the turning shaft 71 or slightly larger than that of the turning shaft 71. The engaging member 72 is connected to the turning shaft 71 so that the center of one circle of the oval shape is positioned on the central axis of the turning shaft 71.

The pressure-loss adjusting member 60 and the reactor 1 according to the present embodiment have the configuration described above, and an operation thereof is explained below. FIG. 9 is a schematic diagram for explaining a case when the pressure-loss adjusting member shown in FIG. 6 is arranged on a lower core support plate. When the pressure-loss adjusting member 60 formed in this manner is to be arranged on the lower core support plate 22, the engaging member 72 of the core support plate engaging unit 70 is directed facing the lower core support plate 22. The core support plate engaging units 70 are provided in the same number as that of the core support plate flow holes 23, near positions corresponding to the core support plate flow holes 23. However, each of the core support plate engaging units 70 is turned around the turning shaft 71 in a manner such that a protruding direction of the engaging member 72 formed in an oval shape faces the central direction of the core support plate flow hole 23 corresponding to each of the core support plate engaging units 70.

When the pressure-loss adjusting member 60 is to be arranged on the lower core support plate 22, the distance between the pressure-loss adjusting member 60 and the lower core support plate 22 is reduced in a state with the core support plate engaging units 70 being turned in this direction, and each of the core support plate engaging units 70 is inserted into each corresponding core support plate flow hole 23.

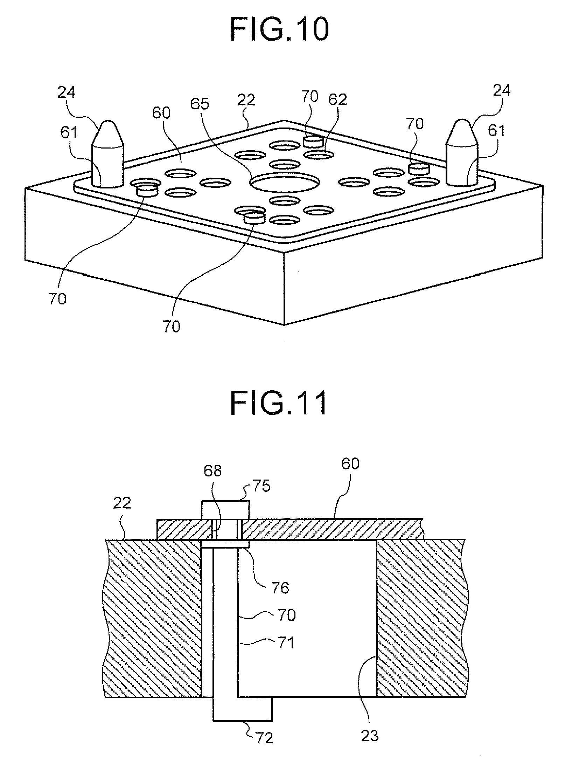

FIG. 10 is a perspective view of a state where the pressure-loss adjusting member shown in FIG. 6 is arranged on a lower core support plate. When the pressure-loss adjusting member 60 is to be arranged on the lower core support plate 22, the fuel assembly guide pins 24 on the lower core support plate 22 are respectively inserted into two engagement holes 61 formed in the pressure-loss adjusting member 60, while inserting the core support plate engaging units 70 into the core support plate flow holes 23. Accordingly, the pressure-loss adjusting member 60 is arranged on the lower core support plate 22 in a state with the fuel assembly guide pins 24 inserted into the engagement holes 61.

FIG. 11 is a schematic diagram for explaining a state before the core support plate engaging unit provided in the pressure-loss adjusting member shown in FIG. 10 and a lower core support plate are engaged with each other. When the pressure-loss adjusting member 60 is arranged on the lower core support plate 22, the core support plate engaging unit 70 is inserted into the core support plate flow hole 23. However, in the core support plate engaging unit 70 inserted into the core support plate flow hole 23, the turning shaft 71 is positioned near an inner wall of the core support plate flow hole 23. Immediately after the pressure-loss adjusting member 60 is arranged on the lower core support plate 22, each of the core support plate engaging units 70 is inserted into the core support plate flow hole 23, with the protruding direction of the engaging member 72 facing the central direction of the core support plate flow hole 23 (FIG. 11). In this case, the entire portion of the engaging member 72 of the core support plate engaging unit 70 passes through the core support plate flow hole 23 and is positioned outside of the core support plate flow hole 23.

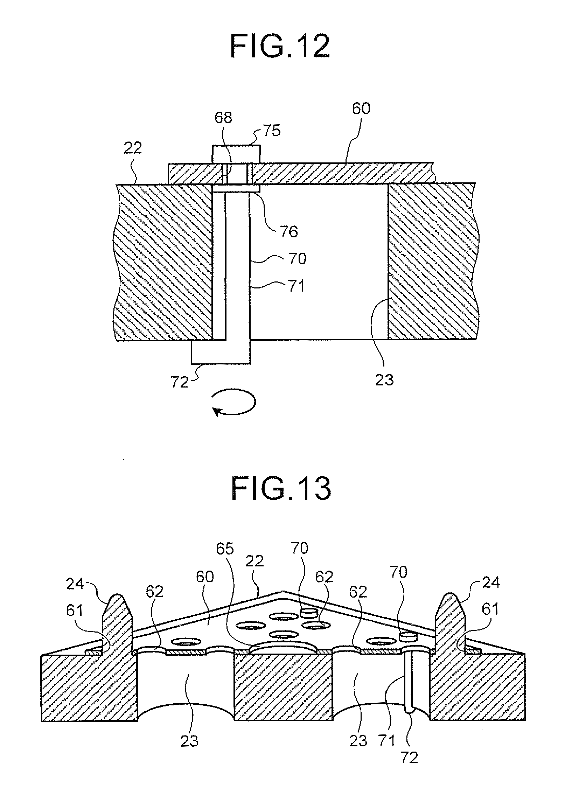

FIG. 12 is a schematic diagram for explaining a state after the core support plate engaging unit provided in the pressure-loss adjusting member shown in FIG. 11 and a lower core support plate are engaged with each other. When the pressure-loss adjusting member 60 is to be arranged on the lower core support plate 22, the core support plate engaging unit 70 in this state is turned, so that the protruding direction of the engaging member 72 faces a direction opposite to the central direction of the core support plate flow hole 23, that is, faces outward of the core support plate flow hole 23 in a radial direction (FIG. 12). Turning thereof is performed by turning the upper latch member 75 of the core support plate engaging unit 70. Because the upper latch member 75 and the engaging member 72 are connected to the turning shaft 71, when the upper latch member 75 is turned, the engaging member 72 turns together with the turning shaft 71. Accordingly, the protruding portion of the engaging member 72 is positioned near an opening of the core support plate flow hole 23 in the lower core support plate 22 and abuts against the lower core support plate 22.

That is, the engaging member 72 abuts against a surface of the lower core support plate 22 opposite to a surface thereof where the pressure-loss adjusting member 60 is arranged, and the engaging member 72 engages with the lower core support plate 22. When the pressure-loss adjusting member 60 is to be arranged on the lower core support plate 22, the engaging member 72 is switched from a released state where the engaging member 72 does not abut against the lower core support plate 22 to an engagement state where the engaging member 72 abuts against the lower core support plate 22 by turning the core support plate engaging unit 70, thereby fixing the pressure-loss adjusting member 60 on the lower core support pl ate 22. That is, the core support plate engaging unit 70 provided in the pressure-loss adjusting member 60 is provided so that switching between engagement and release is possible with respect to the lower core support plate 22 by turning the core support plate engaging unit 70.

FIG. 13 is a sectional view of relevant parts in FIG. 10. When the pressure-loss adjusting member 60 is arranged on the lower core support plate 22 by inserting the fuel assembly guide pins 24 into the engagement holes 61 and the core support plate engaging unit 70 is engaged with the lower core support plate 22, the pressure-loss adjusting holes 62 are overlapped on the core support plate flow holes 23, and communicates with the core support plate flow holes 23. Accordingly, the pressure-loss adjusting hole 62 communicating with the core support plate flow hole 23 has a smaller opening area than that of the core support plate flow hole 23. When the pressure-loss adjusting hole 62 and the core support plate flow hole 23 communicate with each other, because the core support plate flow hole 23 opens according to the opening area of the pressure-loss adjusting hole 62, the core support plate flow hole 23 has substantially a smaller opening area.

When the pressure-loss adjusting member 60 is to be installed on the lower core support plate 22, the pressure-loss adjusting member 60 is engaged with the lower core support plate 22 by the core support plate engaging unit 70 and installed, on the lower core support plate 22. However, because the pressure-loss adjusting member 60 is formed by a thin plate, when the pressure-loss adjusting member 60 is arranged on the lower core support plate 22 by inserting the fuel assembly guide pins 24 into the engagement holes 61, the fuel assembly guide pins 24 penetrate the engagement holes 61 and protrude upward from the pressure-loss adjusting member 60. Therefore, the lower nozzle 50 can be arranged from above of the pressure-loss adjusting member 60 arranged on the lower core support plate 22. In this case, the fuel assembly guide pins 24 penetrating the engagement holes 61 are inserted into two positioning holes 56 of the four positioning holes 56 to arrange the lower nozzle 50 on the pressure-loss adjusting member 60, in such an orientation that ends of the four legs 55 of the lower nozzle 50 can be brought into contact with near the four corners of the pressure-loss adjusting member 60 formed in a rectangular shape. That is, the ends of the legs 55 formed in plural are arranged in contact with one surface of the pressure-loss adjusting member 60 so that the positioning holes 56 and the engagement holes 61 communicate with each other.

Because the lower nozzle 50 can be arranged on the lower core support plate 22 via the pressure-loss adjusting member 60, the fuel assembly 31 fixed with the lower nozzle 50 at the lower end thereof can be arranged on the lower core support plate 22 via the pressure-loss adjusting member 60 from above of the pressure-loss adjusting member 60 in a state with the pressure-loss adjusting member 60 being arranged on the lower core support plate 22. Further, because a plurality of the fuel assembly guide pins 24 are formed on the lower core support plate 22, a number of the fuel assemblies 31 can be arranged on the lower core support plate 22.

The fuel assemblies 31 are arranged in plural between the upper core plate 21 and the lower core support plate 22; however, a spring (not shown), which is an elastic member, is provided between the fuel assembly 31 and the upper core plate 21. The biasing force is applied to the fuel assemblies by the spring in a direction toward the lower core support plate 22. Because the biasing force is also transmitted to the pressure-loss adjusting member 60 via the lower nozzle 50, the biasing force from above downward, that is, the biasing force in a direction pressed against the lower core support plate 22 is applied to the pressure-loss adjusting member 60.

At the time of operating the reactor 1, light water flows around the fuel assemblies 31. However, the pressure-loss when light water flows may be different according to the fuel assembly 31. The pressure-loss adjusting member 60 is not arranged with respect to all the fuel assemblies 31 arranged in plural on the lower core support plate 22, but arranged between the lower nozzle 50 fixed to the fuel assembly 31 having a relatively small pressure-loss and the lower core support plate 22.

As described above, when the reactor 1 in which the pressure-loss adjusting member 60 is arranged is operated, while circulating light water used as a primary coolant and a neutron moderator, a fissile material such as uranium 235 or plutonium contained in the fuel assembly 31 as a fuel constituting the fuel assembly 31 is subjected to a nuclear fission reaction. When the nuclear fission reaction is carried out in this manner with respect to the fissile material, a control-rod drive unit provided in the reactor vessel lid 12 moves a control-rod-cluster drive shaft, to adjust an insertion amount of the control rod into the fuel assembly 31. In this manner, the nuclear fission reaction in the reactor internal 30 is controlled. When the fissile material fissions, thermal energy is generated. However, because circulating light water is filled around the fuel assembly 31, the thermal energy is transmitted to light water around the fuel assembly 31. Accordingly, light water filled in the reactor vessel 10 is heated. High-temperature light water heated by the thermal energy generated at the time of the nuclear fission reaction in this way is discharged from the outlet nozzle 16, and fed to a steam generator.

That is, the fissile material contained in the fuel assembly 31 fissions to discharge neutrons, and light water used as the neutron moderator and the primary coolant in the primary cooling system reduces the kinetic energy of the discharged high-speed neutrons to turn the neutrons into thermal neutrons, thereby facilitating new nuclear fission and drawing generated heat to cool the fuel assembly 31.

The control rod is provided so that the number of neutrons generated in the reactor internal 30 can be adjusted by absorbing neutrons discharged at the time of nuclear fission of the fissile material. For example, when the insertion amount of the control rod into the fuel assembly 31 is increased, the amount of neutrons absorbed by the control rod increases, thereby decreasing the number of neutrons that cause nuclear fission of the fissile material. On the contrary, when the control rod is moved in a pulling-out direction to decrease the insertion amount of the control rod into the fuel assembly 31, because the amount of neutrons absorbed by the control rod decreases, the number of neutrons that cause nuclear fission of the fissile material increases. Accordingly, the frequency of nuclear fission of the fissile material can be changed. Therefore, at the time of operating the reactor 1, a nuclear fission reaction is controlled by adjusting the insertion amount of the control rod, to adjust the amount of thermal energy generated due to the nuclear fission reaction.

At the time of operating the reactor 1, light water is circulated in the primary cooling system. The light water flows into the reactor vessel body 11 from the four inlet nozzles 15, flows downward in the downcomer 45 communicating with the inlet nozzles to reach the lower plenum 42, and then changes the flow direction to upward due to the spherical inner surface of the lower plenum 42. Accordingly, light water moves upward from the lower plenum 42, and after having passed through the lower core support plate 22, flows into the reactor internal 30. Light water flowing into the reactor internal 30 absorbs thermal energy generated from the fuel assemblies 31 arranged in the reactor internal 30 to cool the fuel assemblies 31, and moves up to the upper core plate 21 in a state of high-temperature light water. The high-temperature light water having reached the upper core plate 21 passes through the upper core plate 21 and moves up to the upper plenum 41, and is discharged from the reactor vessel body 11 through the outlet nozzles 16.

In the reactor vessel body 11, light water circulating in the primary cooling system passes through the lower core support plate 22 and the upper core plate 21, and flows from the lower plenum 42 to the upper plenum 41. When passing through the lower core support plate 22, light water passes through the core support plate flow holes 23 formed on the lower core support plate 22. Accordingly, light water flows from the lower plenum 42 to the reactor internal 30, and flows around the fuel assemblies 31.

The lower nozzle 50 fixed to the fuel assembly 31 is arranged on the lower core support plate 22, thereby providing fuel assemblies 31 in the reactor internal 30 in plural. However, there are fuel assemblies 31 in which the pressure-loss adjusting member 60 is arranged between the lower nozzle 50 and the lower core support plate 22 and the fuel assemblies 31 that does not include the pressure-loss adjusting member 60, according to the fuel assembly 31. Therefore, when light water having passed through the lower core support plate 22 flows to the fuel assemblies 31, the flowing state is different according to the presence of the pressure-loss adjusting member 60.

The fuel assembly 31 in which the pressure-loss adjusting member 60 is not arranged between the lower nozzle 50 and the lower core support plate 22 is explained first. Light water having passed through the core support plate flow holes 23 in the lower core support plate 22 moves up directly to the nozzle portion 51 of the lower nozzle 50. Light water having reached the nozzle portion 51 passes through the nozzle flow holes 52 formed in the nozzle portion 51 in plural, and flows around the fuel assemblies 31.

On the contrary, in the fuel assembly 31 in which the pressure-loss adjusting member 60 is arranged between the lower nozzle 50 and the lower core support plate 22, light water having passed through the core support plate flow holes 23 in the lower core support plate 22 passes through the pressure-loss adjusting holes 62 in the pressure-loss adjusting member 60 communicating with the core support plate flow holes 23. However, because the opening area of the pressure-loss adjusting hole 62 becomes smaller than that of the core support plate flow hole 23, the resistance on light water at the time of flowing through the core support plate flow holes 23 and the pressure-loss adjusting holes 62 increases than the resistance at the time of passing through only the core support plate flow holes 23. Therefore, when light water passes through the core support plate flow holes 23 and the pressure-loss adjusting holes 62, light water does not flow so easily as compared with a case that light water passes through only the core support plate flow holes 23, that is, a pressure-loss when light water flows increases. In this way, light water having passed through the core support plate flow holes 23 and the pressure-loss adjusting holes 62 in a state that the pressure-loss is large and light water is hard to flow moves up and flows to the nozzle portion 51 of the lower nozzle 50, passes through the nozzle flow holes 52 formed in the nozzle portion 51 in plural, and flows around the fuel assemblies 31.

The pressure-loss adjusting member 60 is arranged between the lower nozzle 50 and the lower core support plate 22 of the fuel assembly 31 having a relatively small pressure-loss. When light water having passed through the lower core support plate 22 passes through the pressure-loss adjusting member 60 and flows to the lower nozzle 50, the pressure-loss increases as compared with a case that light water having passed through the lower core support plate 22 flows directly to the lower nozzle 50. Therefore, light water having passed through the lower core support plate 22 and the pressure-loss adjusting member 60 and having a large pressure-loss flows to the fuel assembly 31 having a small pressure-loss. On the contrary, light water having passed through only the lower core support plate 22 and having a small pressure-loss flows to the fuel assembly 31 having a large pressure-loss.

Therefore, when the pressure-loss when light water flows from the lower plenum 42 to the fuel assembly 31 is considered in a comprehensive manner, the comprehensive pressure-loss in the fuel assembly 31 having a small pressure-loss and that in the fuel assembly 31 having a large pressure-loss are substantially the same. Accordingly, light water flowing from the lower plenum 42 to the reactor internal 30 does not flow much to the fuel assembly 31 having a small pressure-loss, and is distributed to a plurality of the fuel assemblies 31, and flows to the fuel assemblies 31 substantially uniformly. Light water flowing substantially uniformly to the fuel assemblies 31 uniformly cools the fuel assemblies 31 or uniformly generates thermal neutrons. Therefore, the reactor 1 can be stably operated due to the effect of light water.

At the time of operating the reactor 1, light water flows in the above manner. However, when light water flows in the pressure-loss adjusting holes 62 in the pressure-loss adjusting member 60, pressure-loss increases; in other words, resistance when light water flows increases. Therefore, a force generated by the flow of light water acts on the pressure-loss adjusting member 60, that is, a force from the lower core support plate 22 side toward the lower nozzle 50 acts on the pressure-loss adjusting member 60. The force acting on the pressure-loss adjusting member 60 becomes a force separating the pressure-loss adjusting member 60 from the lower core support plate 22 and floating it upward, and acts on the pressure-loss adjusting member 60. However, the biasing force in a direction pressed against the lower core support plate 22 is applied to the pressure-loss adjusting member 60 by the spring arranged between the upper core plate 21 and the fuel assembly 31. That is, the biasing force becomes a force acting in a direction opposite to a direction in which the force generated by the flow of light water acts on the pressure-loss adjusting member 60. Therefore, the pressure-loss adjusting member 60 is hardly floated from the lower core support plate 22 by the force generated by the flow of light water.

The core support plate engaging unit 70 is further provided in the pressure-loss adjusting member 60. The core support plate engaging unit 70 penetrates through the core support plate flow hole 23 in the lower core support plate 22, and the engaging member 72 is engaged with a surface of the lower core support plate 22 opposite to the surface thereof where the pressure-loss adjusting member 60 is arranged. This engagement is performed by abutment of the engaging member 72 against the lower core support plate 22 in a direction in which light water having passed through the core support plate flow holes 23 passes through the pressure-loss adjusting holes 62. Therefore, a movement of the pressure-loss adjusting member 60 due to a force generated when light water flows in this direction is regulated. Therefore, the pressure-loss adjusting member 60 is hardly floated from the lower core support plate 22 by the force generated due to the flow of light water. Accordingly, the pressure-loss adjusting member 60 causes light water having passed through the core support plate flow holes 23 to flow in the direction toward the lower nozzle 50 and in the direction toward the fuel assembly 31, with the pressure-loss increased more reliably by the pressure-loss adjusting holes 62.

Because the pressure-loss adjusting holes 62 are formed in the pressure-loss adjusting member 60, when light water from the lower plenum 42 flows from the lower core support plate 22, on which the pressure-loss adjusting member 60 is arranged, toward the lower nozzle 50, the pressure-loss adjusting member 60 can cause light water having passed through the core support plate flow holes 23 to pass and flow through the pressure-loss adjusting holes 62. Because the pressure-loss adjusting holes can cause light water to pass therethrough in a state with a pressure-loss in the fuel assembly being increased more than that of when light water for the fuel assembly passes through only the core support plate flow holes, when the pressure-loss adjusting member 60 is arranged on the lower core support plate 22, light water flows in a state with a pressure-loss being increased as compared with a case that the pressure-loss adjusting member 60 is not arranged on the lower core support plate 22. Accordingly, by arranging the pressure-loss adjusting member 60 between the lower nozzle 50 of the fuel assembly 31 having a small pressure-loss and the lower core support plate 22, the pressure-loss of light water flowing toward the fuel assembly 31 can be increased, thereby enabling to decrease the flow rate. Therefore, the flow rate of light water flowing in the fuel assembly can be made substantially the same as that of light water flowing in the fuel assembly 31 having a large pressure-loss.

The core support plate engaging unit 70 that can be engaged with the lower core support plate 22 is provided in the pressure-loss adjusting member 60. Accordingly, even when light water passes through the pressure-loss adjusting holes 62, it can be suppressed that the pressure-loss adjusting member 60 moves due to the force generated by the flow of light water, and rattling or the like of the pressure-loss adjusting member 60 due to the flow of light water can be suppressed. As a result, problems due to the flow of light water can be suppressed, while easily distributing the flow rate of light water to the fuel assemblies 31.

Because the pressure-loss adjusting member 60 is fixed on the lower core support plate 22 not only by pressing the pressure-loss adjusting member 60 against the lower core support plate 22 by the biasing force of the spring arranged between the upper core plate 21 and the fuel assembly 31, but also by engaging the core support plate engaging unit 70 with the lower core support plate 22, rattling or the like of the pressure-loss adjusting member 60 can be suppressed more reliably. That is, by fixing the pressure-loss adjusting member 60 on the lower core support plate 22 by the core support plate engaging unit 70, it can be suppressed more reliably that the pressure-loss adjusting member 60 moves due to the force generated by the flow of light water, even when the biasing force decreases due to aged deterioration of the spring to decrease the force pressing the pressure-loss adjusting member 60 against the lower core support plate 22. As a result, problems due to the flow of light water can be suppressed for a long time.

When the core support plate engaging unit 70 is engaged with the lower core support plate 22, the core support plate engaging unit 70 abuts against the lower core support plate 22 in the direction in which light water passes through the pressure-loss adjusting holes 62. Therefore, it can be suppressed more reliably that the pressure-loss adjusting member 60 moves due to the force generated by the flow of light water. As a result, problems due to the flow of light water can be suppressed more reliably.

Because the core support plate engaging unit 70 is provided so that switching between engagement and release is possible by turning, when the core support plate engaging unit 70 is engaged with the lower core support plate 22, the core support plate engaging unit 70 can be easily engaged with the lower core support plate 22. As a result, problems due to the flow of light water can be suppressed more easily.

Because the core support plate engaging unit 70 includes the turning shaft 71 inserted into the core support plate flow hole 23 and the engaging member 72 that turns with turning of the turning shaft 71, the pressure-loss adjusting member 60 can be engaged with the lower core support plate 22 only by providing the core support plate engaging unit 70 in the pressure-loss adjusting member 60. That is, when the pressure-loss adjusting member 60 is to be engaged with the lower core support plate 22, the pressure-loss adjusting member 60 can be engaged with the lower core support plate 22 only by engaging the engaging member 72 of the core support plate engaging unit 70 with the lower core support plate 22, without performing machining for engagement with the engaging member 72 with respect to the lower core support plate 22. As a result, problems due to the flow of light water can be suppressed more easily.

In the reactor 1 according to the present embodiment, the pressure-loss adjusting member 60 described above is arranged between the lower nozzle 50 arranged at one end of the fuel assembly 31 having a relatively small pressure-loss and the lower core support plate 22. Therefore, the flow rate of light water flowing in the fuel assembly 31 can be made substantially the same as that of light water flowing in the fuel assembly 31 having a relatively large pressure-loss. That is, when light water flows from the lower core support plate 22 toward the lower nozzle 50, the pressure-loss adjusting member 60 can cause light water to flow in a state with a large pressure-loss, as compared with a case that the pressure-loss adjusting member 60 is not arranged. Therefore, by arranging the pressure-loss adjusting member 60 between the lower nozzle 50 arranged at one end of the fuel assembly 31 having a relatively small pressure-loss and the lower core support plate 22, it can be suppressed that light water flows much to the fuel assembly 31 having a small pressure-loss, when light water flows from the lower core support plate 22 toward the fuel assembly 31. Accordingly, the flow rate of light water flowing to the fuel assemblies 31 can be made substantially the same, regardless of the magnitude of the pressure-loss in the fuel assemblies 31.

The core support plate engaging unit 70 is provided in the pressure-loss adjusting member 60, and the pressure-loss adjusting member 60 can be arranged in a state engaged with the lower core support plate 22 by the core support plate engaging unit 70. Accordingly, even when light water passes through the pressure-loss adjusting holes 62, it can be suppressed that the pressure-loss adjusting member 60 moves due to the force generated by the flow of light water, and rattling or the like of the pressure-loss adjusting member 60 due to the flow of light water can be suppressed. As a result, problems due to the flow of light water can be suppressed, while easily distributing the flow rate of light water to the fuel assemblies 31.

In the pressure-loss adjusting member 60 described above, the turning shaft 71 and the engaging member 72 of the core support plate engaging unit 70 turn in an integrated manner, and the core support plate engaging unit 70 is engaged with the lower core support plate 22, with the engaging member 72 abutting against the surface of the lower core support plate 22 opposite to the surface thereof where the pressure-loss adjusting member 60 is arranged. However, engagement by the core support plate engaging unit 70 can be performed according to other forms. The form can be arbitrary, so long as the core support plate engaging unit 70 can easily engage the pressure-loss adjusting member 60 with the lower core support plate 22 and a movement of the pressure-loss adjusting member 60 due to the force generated by the flow of light water at the time of passing through the pressure-loss adjusting holes 62 can be suppressed.

In the pressure-loss adjusting member 60, the core support plate engaging units 70 are provided in the same number as that of the core support plate flow holes 23 positioned in a range of the pressure-loss adjusting member 60 arranged on the lower core support plate 22 with respect to one pressure-loss adjusting member 60. However, the number of the core support plate engaging units 70 to be provided can be different from the number of core support plate flow holes 23. It is desired to appropriately set the number of the core support plate engaging units 70 according to the form of the core support plate engaging unit 70, the size of the pressure-loss adjusting member 60, the size and the number of the pressure-loss adjusting holes 62, and the flow rate and flow velocity of light water.

The pressure-loss adjusting member 60 is formed in a shape of a substantially rectangular thin plate. However, the shape of the pressure-loss adjusting member 60 can be other shapes. The shape of the pressure-loss adjusting member 60 itself can be any shape, so long as the pressure-loss adjusting holes 62 are formed and the core support plate engaging unit 70 is provided, and at the time of arranging the pressure-loss adjusting member 60 on the lower core support plate 22, the pressure-loss adjusting member 60 is engaged with the lower core support plate 22 by the core support plate engaging unit 70.

### [Industrial Applicability]

As described above, the pressure-loss adjusting member and the reactor according to the present invention are useful in a pressurized water reactor, and are particularly suitable for a case of using a plurality of types of fuel assemblies.

### [Reference Signs List]

- 1: reactor
- 10: reactor vessel
- 15: inlet nozzle
- 16: outlet nozzle
- 20: core barrel
- 21: upper core plate
- 22: lower core support plate
- 23: core support plate flow hole
- 24: fuel assembly guide pin
- 25: upper core support
- 30: reactor internal
- 31: fuel assembly
- 41: upper plenum
- 42: lower plenum
- 50: lower nozzle
- 51: nozzle portion
- 52: nozzle flow hole
- 55: leg
- 56: positioning hole
- 60: pressure-loss adjusting member
- 61: engagement hole
- 62: pressure-loss adjusting hole
- 68: turning shaft hole
- 70: core support plate engaging unit
- 71: turning shaft
- 72: engaging member
- 75: upper latch member
- 76: lower latch member

## Claims

1. A pressure-loss adjusting member (60) comprising:
a pressure-loss adjusting hole (62) that is configured to cause a primary coolant for a fuel assembly (31) to pass therethrough in a state with a pressure-loss in the fuel assembly (31) being increased more than that of when the primary coolant passes through only a core support plate flow hole (23) formed in a lower core support plate (22); and
a core support plate engaging unit (70) that is configured to be engaged with the lower core support plate (22) by being inserted into the core support plate flow hole (23).

2. The pressure-loss adjusting member (60) of Claim 1, wherein the core support plate engaging unit (70) is provided in an engageable manner with the lower core support plate (22), by abutting against the lower core support plate (22) in a direction in which the primary coolant passes through the pressure-loss adjusting hole (62).

3. The pressure-loss adjusting member (60) of Claim 1 or 2, wherein the core support plate engaging unit (70) is provided so that switching between engagement and release with respect to the lower core support plate (22) can be performed by turning thereof.

4. The pressure-loss adjusting member (60) of any one of Claims 1 to 3, wherein
the core support plate engaging unit (70) includes:
a rotation shaft (71) that is inserted into the core support plate flow hole (23) and becomes an axis at a time of turning; and
an engaging member (72) that is connected to the rotation shaft (71) and turns with turning of the rotation shaft (71) to switch between abutment and alienation with respect to the lower core support plate (22).

5. A reactor (1) comprising:
a lower nozzle (50) formed with a plurality of nozzle flow holes (52), through which a primary coolant for a fuel assembly (31) can flow toward the fuel assembly (31), and arranged at one end of the fuel assembly (31);
a lower core support plate (22) provided so that a plurality of lower nozzles (50) can be arranged on one surface thereof, and a plurality of core support plate flow holes (23) that can cause the primary coolant to flow therethrough in a direction from a surface of the lower core support plate (22) opposite to a surface on the lower nozzle (50) side toward the lower nozzle (50) are formed therein; and
the pressure-loss adjusting member (60) of any one of Claims 1 to 4, which is arranged between the lower nozzle (50) arranged at one end of the fuel assembly (31) having a relatively small pressure-loss and the lower core support plate (22), with the core support plate engaging unit (70) engaging witch the lower core support plate (22) at a position between the lower nozzle (50) and the lower core support plate (22).
